# EUROPÄISCHE PATENTSCHRIFT

(11) **EP 0 693 806 B1**
(45) Veröffentlichungstag und Bekanntmachung des Hinweises auf die Patenterteilung: **13.10.1999**
(21) Anmeldenummer: 95110720.0
(22) Anmeldetag: 10.07.1995
(51) Int. Cl.: H01R 35/04, B62D 1/04

(54) **Vorrichtung zur Signalübertragung zwischen zwei Endstellen**
Device for signal transmission between two terminals
Dispositif de transmission de signaux entre deux terminaux

(30) Priorität: 22.07.1994 DE 4426018
(43) Veröffentlichungstag der Anmeldung: 24.01.1996
(73) Patentinhaber: ALCATEL, 75008 Paris (FR)
(72) Erfinder: Schauer, Friedrich, D-90562 Heroldsberg (DE)
(74) Vertreter: Döring, Roger, Dipl.-Ing.

(56) Entgegenhaltungen:
- EP-A- 0 195 833
- US-A- 4 919 620
- PATENT ABSTRACTS OF JAPAN vol. 13 no. 226 (E-763) ,25.Mai 1989 & JP-A-01 035884 (FURUKAWA) 6.Februar 1989,

## Beschreibung

Die Erfindung bezieht sich auf eine Vorrichtung zur Signalübertragung zwischen zwei Endstellen, zwischen denen eine in Windungen verlaufende und in einer im wesentlichen kreisförmigen Kassette untergebrachte Leitung angeordnet ist, an die weiterführende Leitungen an den beiden Endstellen anschließbar sind und deren Länge wesentlich größer als der Abstand der beiden Endstellen voneinander ist, bei welcher mindestens eine der beiden Endstellen relativ zu der anderen bewegbar ist, bei welcher die Kassette aus zwei Teilen besteht, einem um die Achse der Kassette drehbaren Rotor und einem feststehenden Stator, zwischen denen die Leitung angeordnet ist, bei welcher an der Kassette ein in axialer Richtung verschiebbarer, unter Federwirkung stehender Verriegelungskörper zur Festlegung einer Montageposition angebracht ist, in welcher der Rotor gegenüber dem Stator unverdrehbar fixiert ist, und bei welcher Rastelemente des konzentrisch zur Achse der Kassette angeordneten Verriegelungskörpers in der Montageposition der Kassette unter der Federwirkung stehend in den Stator eingreifen und in deren Arbeitsposition entgegen der Federwirkung durch einen Zwischenraum vom Stator getrennt sind (US-A-4 919 620).

Eine derartige Vorrichtung wird beispielsweise für die Übertragung eines Signals zum Auslösen des "Airbag" eines Prallschutzes für Kraftfahrzeuge benötigt. Sie ist zur Übertragung eines elektrischen oder optischen Signals in der Lenksäule eines Kraftfahrzeugs untergebracht. "Leitung" im Sinne der Erfindung kann also eine elektrische oder eine optische Leitung sein. Ein wesentliches Problem für diese Vorrichtung ist die Signalübertragung zwischen feststehenden und beweglichen Teilen des Kraftfahrzeugs. Die für solche Fälle seit langem bekannten, der Stromübertragung dienenden Schleifkontakte bzw. Schleifringe sind einem Verschleiß unterworfen und insbesondere bei niedrigen Stromstärken wegen der schwankenden Übergangswiderstände nachteilig.

Bei der bekannten Vorrichtung nach der DE-A- 4 216 526 wird für die Signalübertragung elektrischer Strom verwendet. Die Stromübertragung erfolgt durch eine beispielsweise nach Art eines Federhauses gewickelte Flachband-Leitung - im folgenden kurz als "FBL" bezeichnet. Bei einer relativen Drehbewegung der beiden durch die FBL verbundenen Endstellen, "atmet" die aufgewickelte FBL wie die Feder einer Uhr. Die Windungen der gewickelten FBL werden in der einen Drehrichtung auf einen kleineren Durchmesser zusammengezogen. Sie gehen in der anderen Drehrichtung wieder auf einen größeren Durchmesser auf. Für den Einbau dieser Vorrichtung in die Lenksäule eines Kraftfahrzeugs ist es daher von Bedeutung, daß die beiden Endstellen eine ganz bestimmte Position zueinander haben, mit einer entsprechenden Position der FBL, damit die vorgegebenen Umdrehungen des Rotors möglich sind, ohne daß die FBL von den Endstellen abgerissen oder sonstwie zerstört wird. Dazu ist am Rotor ein nach außen abstehender Ansatz zur Aufnahme einer in Achsrichtung der Kassette verstellbaren Schraube angebracht. Am Rotor ist außerdem ein mittels der Schraube verstellbares, fedemdes Element angeordnet, das in Montageposition der Kassette am Stator festgelegt und in Arbeitsposition derselben durch einen Zwischenraum vom Stator getrennt ist. Die aus Schraube und federndem Element bestehende Verriegelung ist bei dieser Vorrichtung jeweils von Hand zu betätigen.

Aus der eingangs erwähnten US-A-4 919 620 geht eine Vorrichtung zum Verbinden zweier Endstellen hervor, bei welcher in einer zentralen Ausnehmung des Rotors ein axial verschiebbarer Verriegelungskörper mit zwei in axialer Richtung weisenden, um 180° gegeneinander versetzten Vorsprüngen angebracht ist. In zwei um 180° gegeneinander versetzte Aufnahmen des Verriegelungskörpers greifen Federn ein, die auf einem fest mit dem Rotor verbundenen Halter abgestützt sind. In Montageposition der Kassette greifen die Vorsprünge des Verriegelungskörpers in Vertiefungen des Stators der Kasette ein, so daß Rotor und Stator derselben untereinander verriegelt sind. In Arbeitsposition der Kassette sind die Federn zusammengedrückt, so daß die Vorsprünge des Verriegelungskörpers nicht mehr in den Stator eingreifen. Der Rotor der Kassette ist dann drehbar.

Der Erfindung liegt die Aufgabe zugrunde, die eingangs geschilderte Vorrichtung so zu gestalten, daß Montageposition und Arbeitsposition der Kassette sich unter Verwendung einer einfach gestalteten Verriegelungsanordnung ohne gesonderten Arbeitsgang automatisch einstellen.

Diese Aufgabe wird gemäß der Erfindung dadurch gelöst,
- daß zur Erzielung der Federwirkung in einer zentralen Vertiefung des Rotors konzentrisch zur Achse der der Kassette eine Zylinderfeder angebracht ist, die mit einer Stimseite an einem Boden der Vertiefung anliegt und andererseits in Montageposition der Kassette über dieselbe hinausragt, und
- daß der Verriegelungskörper in der Zylinderfeder angebracht ist, die Zylinderfeder an ihrer über die Kassette hinausragenden freien Stimseite umschließt und mindestens zwei voneinander getrennte und in Umfangsrichtung der Zylinderfeder gegeneinander versetzte, die Rastelemente bildende, Rastarme hat, die parallel zur Achse der Kassette verlaufen und über die am Boden der Vertiefung anliegende Stirnseite der Zylinderfeder hinausragen.

Nach Fertigstellung der Kassette werden Stator und Rotor in der vorgegebenen Montageposition durch Einsetzen der Zylinderfeder und des Verriegelungskörpers miteinander verriegelt. Dabei greifen die Rastarme des Verriegelungskörpers in entsprechende Ausnehmungen des Stators ein, in denen sie unter der Wirkung der am Rotor abgestützten Zylinderfeder gehalten werden. Die Kassette kann dann in die Lenksäule eines Kraftfahrzeugs eingebaut werden. Beim Aufsetzen des Lenkrades auf die Lenksäule drückt dasselbe gegen den Verriegelungskörper und die Zylinderfeder, die dadurch zusammengedrückt wird. Dabei wird auch der Verriegelungskörper in axialer Richtung bewegt, so daß die Rastarme aus der Verriegelungsstellung herausgelangen. Sie kommen vom Stator frei, so daß der Rotor danach mit dem Lenkrad unbehindert gedreht werden kann. Wenn die Kassette beispielweise für Reparaturzwecke ausgebaut werden soll, wird zunächst das Lenkrad von der Lenksäule entfernt. Dadurch wird die Zylinderfeder entlastet. Die Rastarme des dabei von der Zylinderfeder mitgenommenen Verriegelungskörpers gelangen automatisch wieder in die Verriegelungsstellung. Die Kassette kann dann in ihrer Montageposition, in der Stator und Rotor untereinander verriegelt sind, aus der Lenksäule genommen werden. Durch die Zylinderfeder können bei entsprechender Länge des aus der Kassette herausragenden Teils auf einfache Weise Toleranzen ausgeglichen werden. Das gilt insbesondere für schwankende Abstände zwischen dem Lenkrad und der montierten Kassette.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:
Fig. 1 schematisch eine prinzipielle Darstellung einer Kassette mit einer Vorrichtung nach der Erfindung.
Fig. 2 in schematischer Darstellung einen Querschnitt durch eine Kassette.
Fig. 3 und 4 Schnitte durch die Kassette mit unterschiedlichen Positionen der eingesetzten Zylinderfeder.

Die Erfindung wird im folgenden für eine Kassette beschrieben, in der eine Flachbandleitung (FBL) mit elektrischen Leitern angebracht ist. Statt der FBL könnte aber auch eine Leitung mit mindestens einem Lichtleiter eingesetzt werden. Auch eine kombinierte Leitung mit elektrischen und optischen Leitern könnte verwendet werden.

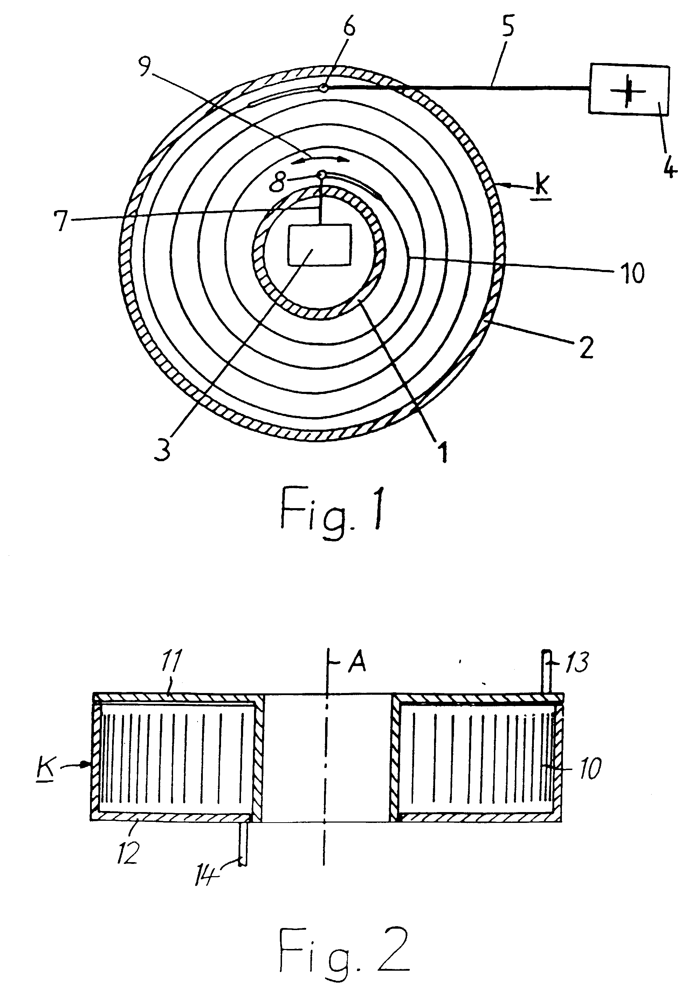

In Fig. 1 sind schematisch zwei beispielsweise kreisförmig ausgebildete Wände 1 und 2 einer Kassette K dargestellt. Sie ist für den Einbau in die Lenksäule eines Kraftfahrzeugs bestimmt. Zur Stromversorgung einer Elektronik 3, durch deren Signal ein Prallsack ausgelöst werden kann, ist die Kassette K an die Batterie 4 des Kraftfahrzeugs angeschlossen. Die Batterie 4 ist über eine elektrische Leitung 5 mit einer als Festpunkt ausgeführten Endstelle 6 der Kassette K verbunden. Die Elektronik 3 ist über eine elektrische Leitung 7 an eine Endstelle 8 der Kassette K angeschlossen, die in Richtung des Doppelpfeiles 9 bewegbar ist. Grundsätzlich könnten auch die Endstelle 8 feststehend und die Endstelle 6 bewegbar ausgeführt sein. Es könnten auch beide Endstellen 6 und 8 bewegbar sein.

Zwischen den beiden Endstellen 6 und 8 ist eine FBL 10 mit mindestens zwei elektrischen Leitern angebracht. Die Leiter sind vorzugsweise als Flachleiter ausgebildet. Diese Ausführungsform der FBL 10 ist besonders dünn und nimmt daher sehr wenig Raum ein. Grundsätzlich könnte die FBL 10 aber auch runde Leiter haben. Der Aufbau der FBL 10 und die Art ihres Anschlusses bzw. Abschlusses an den Endstellen 6 und 8 sind nicht genauer dargestellt. Sie sind prinzipiell in unterschiedlichen Varianten bekannt und hier nicht von Bedeutung.

Die FBL 10 kann gemäß Fig. 1 in der Kassette K zwischen den beiden Endstellen 6 und 8 in mehreren Windungen, also nach Art eines Federhauses von Uhren, angeordnet sein. Obwohl die Anzahl der Umdrehungen eines Lenkrades auf etwa sechs Umdrehungen begrenzt ist, sollen mehr als sechs Windungen für die FBL 10 vorgesehen sein. Die Drehbewegung der Endstelle 8 macht sich dann für eine einzelne Windung der FBL 10 nicht wesentlich bemerkbar. Es wird lediglich der Durchmesser des aus allen Windungen der FBL 10 bestehenden Wickels verkleinert bzw. vergrößert.

Die Kassette K besteht gemäß Fig. 2 aus einem Rotor 11 und einem Stator 12. Der Rotor 11 ist gegenüber dem Stator 12 um die Achse A der Kassette K drehbar. Der feststehende Stator 12 umschließt die FBL 10, von der in Fig. 2 nur einige Windungen schematisch eingezeichnet sind. An die FBL 10 sind weiterführende, aus der Kassette K herausgeführte elektrische Leitungen 13 und 14 angeschlossen.

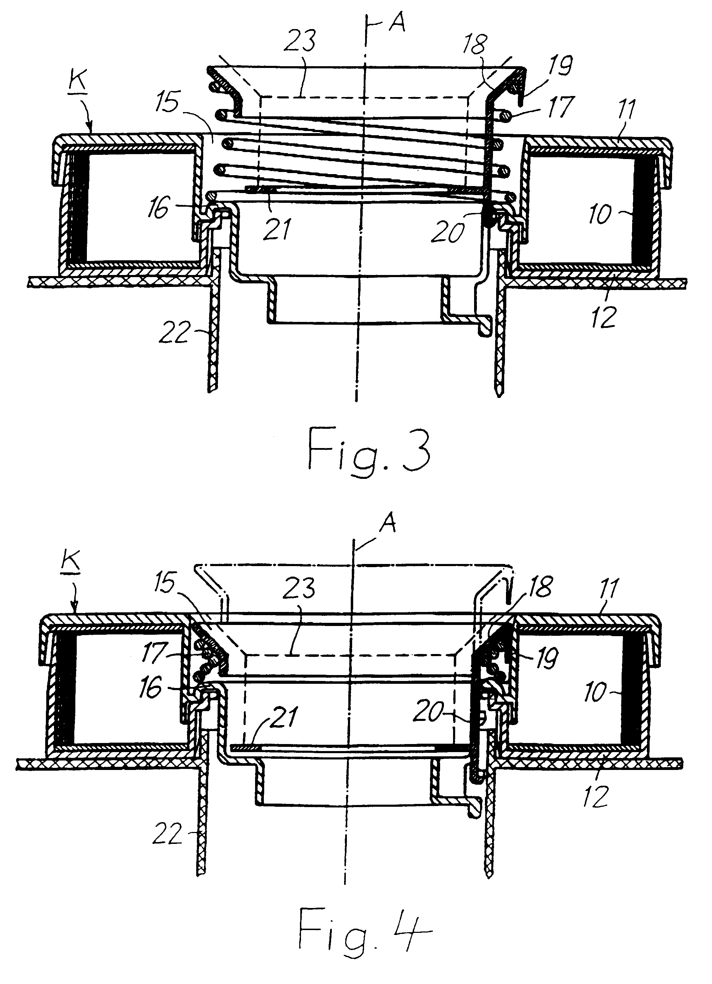

Der Rotor 11 hat gemäß Fig. 3 eine zentrale Vertiefung 15, die konzentrisch zur Achse A der Kassette K verläuft. Die Vertiefung 15 ist etwa topfförmig ausgebildet. Sie hat einen Boden 16, der im dargestellten Ausführungsbeispiel ringscheibenförmig ausgebildet ist. In der Vertiefung 15 ist eine Zylinderfeder 17 angeordnet, die mit ihrer einen Stirnseite am Boden 16 der Vertiefung 15 anliegt. Das andere Ende der Zylinderfeder 17 ragt in der aus Fig. 3 ersichtlichen Montageposition der Kassette K über dieselbe hinaus.

In der Zylinderfeder 17 ist ein beispielsweise rohrförmiger Verriegelungskörper 18 angebracht, der an seinem einen Ende konisch erweitert ist. Mit diesem Ende ragt der Verriegelungskörper 18 sowohl axial als auch radial über die Zylinderfeder 17 hinaus. Er kann an seinem Rand mindestens zwei Haken 19 aufweisen, die parallel zur Achse A der Kassette K verlaufen und die Zylinderfeder 17 von außen umfassen. Die Haken 19 sind in Umfangsrichtung der Zylinderfeder 17 gegeneinander versetzt. Es sind vorzugsweise drei oder vier Haken 19 vorhanden. Statt der getrennten Haken 19 könnte auch ein die Zylinderfeder 17 von außen umfassender, umlaufender Kragen am Verriegelungskörper 18 angebracht sein.

Am anderen Ende des Verriegelungskörper 18 sind mindestens zwei in Umfangsrichtung gegeneinander versetzte, parallel zur Achse A der Kassette K verlaufende Rastarme 20 angebracht, die axial über die am Boden 16 der Vertiefung 15 anliegende Stirnseite der Zylinderfeder 17 hinausragen. Die relativ langen Rastarme 20 können zu ihrer Stabilisierung durch einen an ihren Innenseiten anliegenden, ringscheibenförmigen Halter 21 miteinander verbunden sein. Der Halter 21 ist Teil des Verriegelungskörpers 18. Die Rastarme 20 greifen in der Montageposition der Kassette K in den Stator 12 ein. Rotor 11 und Stator 12 sind dann verdrehsicher miteinander verriegelt. Der Stator 12 ist bei montierter Kassette K fest mit der nur schematisch angedeuteten Lenksäule 22 eines Kraftfahrzeugs verbunden.

Die Zylinderfeder 17 ist entsprechend Fig. 3 vorzugsweise als "Taillenfeder" ausgebildet. Die mittleren Windungen haben mit gleichförmigem Übergang zu den Windungen an den Stirnseiten einen kleineren Durchmesser. Eine solche "Taillenfeder" läßt sich gemäß Fig. 4 auf eine kleinere Höhe zusammendrücken als eine Feder mit gleichbleibendem Durchmesser. Die Höhe der Vertiefung 15 kann dadurch kleiner bemessen werden.

Nach Montage der Kassette K an der Lenksäule 22 wird deren Lenkrad aufgesetzt. Das Lenkrad drückt gegen den Verriegelungskörper 18 und damit auf die Zylinderfeder 17. Dieselbe wird dabei in Abhängigkeit von ihrer Länge und vom zurückzulegenden Weg bei der Montage des Lenkrades zusammengedrückt. Sie kann maximal so weit zusammengedrückt werden, bis die Oberkante des Verriegelungskörpers 18 mit der Oberkante der Kassette K fluchtet. Diese Position wird in der Praxis aber kaum erreicht werden, da die Länge der Zylinderfeder 17 zweckmäßig so bemessen wird, daß alle Toleranzen und insbesondere schwankende Abstände zwischen dem Lenkrad und der Kassette K ausgeglichen werden können.

Wenn das Lenkrad eine in den Fig. 3 und 4 gestrichelt eingezeichnete Nabe 23 hat, dann wird der Verriegelungskörper 18 zweckmäßig an dieselbe angepaßt. Beim Einbau des Lenkrades drückt dann die Nabe 23 auf den Halter 21 des Verriegelungskörpers 18, der in axialer Richtung mitgenommen wird und die Zylinderfeder 17 zusammendrückt. In diesem Fall ergibt sich eine aus Fig. 4 ersichtliche, maximal erreichbare Position von Verriegelungskörper 18 und Zylinderfeder 17.

Die Rastarme 20 werden beim Zusammendrücken der Zylinderfeder 17 ebenfalls in axialer Richtung bewegt. Sie kommen dadurch vom Stator 12 frei, wodurch die Verriegelung zwischen Rotor 11 und Stator 12 aufgehoben wird. Der Rotor 11 kann dann frei mit dem Lenkrad gedreht werden. Um ein Verkanten des Verriegelungskörpers 18 auszuschließen, sollten drei oder vier, in Umfangsrichtung gegeneinander versetzte Rastarme 20 an demselben angebracht werden, die durch den Halter 21 miteinander verbunden sind.

Bei einer beispielwseise für Reparaturzwecke erforderlichen Demontage der Kassette K wird zunächst das Lenkrad entfernt. Die Zylinderfeder 17 geht dann in ihre aus Fig. 3 ersichtliche Stellung zurück. Sie nimmt dabei den Verriegelungskörper 18 mit. Dessen Rastarme 20 greifen wieder in den Stator 12 ein. Rotor 11 und Stator 12 sind dadurch in der Montageposition der Kassette K wieder gegeneinander verriegelt. Die Kassette K kann dann ausgebaut und nach Beendigung der Reparatur direkt lagerichtig wieder eingebaut werden.

## Patentansprüche

1. Vorrichtung zur Signalübertragung zwischen zwei Endstellen, zwischen denen eine in Windungen verlaufende und in einer im wesentlichen kreisförmigen Kassette (K) untergebrachte Leitung (10) angeordnet ist, an die weiterführende Leitungen an den beiden Endstellen anschließbar sind und deren Länge wesentlich größer als der Abstand der beiden Endstellen voneinander ist, bei welcher mindestens eine der beiden Endstellen relativ zu der anderen bewegbar ist, bei welcher die Kassette (K) aus zwei Teilen besteht, einem um die Achse der Kassette (K) drehbaren Rotor (11) und einem feststehenden Stator (12), zwischen denen die Leitung (10) angeordnet ist, bei welcher an der Kassette (K) ein in axialer Richtung verschiebbarer, unter Federwirkung stehender Verriegelungskörper (18) zur Festlegung einer Montageposition angebracht ist, in welcher der Rotor (11) gegenüber dem Stator (12) unverdrehbar fixiert ist, und bei welcher Rastelemente des konzentrisch zur Achse (A) der Kassette (K) angeordneten Verriegelungskörpers (18) in der Montageposition der Kassette (K) unter der Federwirkung stehend in den Stator (12) eingreifen und in deren Arbeitsposition entgegen der Federwirkung durch einen Zwischenraum vom Stator (12) getrennt sind, **dadurch gekennzeichnet,**
- daß zur Erzielung der Federwirkung in einer zentralen Vertiefung (15) des Rotors (11) konzentrisch zur Achse (A) der Kassette (K) eine Zylinderfeder (17) angebracht ist, die mit einer Stirnseite an einem Boden (16) der Vertiefung (15) anliegt und andererseits in Montageposition der Kassette (K) über dieselbe hinausragt, und
- daß der Verriegelungskörper (18) in der Zylinderfeder (17) angebracht ist, die Zylinderfeder (17) an ihrer über die Kassette (K) hinausragenden freien Stirnseite umschließt und mindestens zwei voneinander getrennte und in Umfangsrichtung der Zylinderfeder (17) versetzte, die Rastelemente bildende, Rastarme (20) hat, die parallel zur Achse (A) der Kassette (K) verlaufen und über die am Boden (16) der Vertiefung (15) anliegende Stirnseite der Zylinderfeder (17) hinausragen.

2. Vorrichtung nach Anspruch 1, dadurch gekennzeichnet, daß die Rastarme (20) durch einen an ihren Innenseiten anliegenden, ringscheibenförmigen Halter (21) des Verriegelungskörpers (18) untereinander verbunden sind.

3. Vorrichtung nach Anspruch 1 oder 2, dadurch gekennzeichnet, daß die Windungen der Zylinderfeder (17) in ihrem mittleren Bereich mit gleichförmigem Übergang zu ihren Stirnseiten einen kleineren Durchmesser als die Windungen an den Stirnseiten haben.

4. Vorrichtung nach einem der Ansprüche 1 bis 3, dadurch gekennzeichnet, daß der Verriegelungskörper (18) rohrförmig ausgeführt ist, mit einer Erweiterung an einem Ende, die in axialer und radialer Richtung über die freie Stirnseite der Zylinderfeder (17) hinausragt.

5. Vorrichtung nach einem der Ansprüche 1 bis 4, dadurch gekennzeichnet, daß an der Erweiterung des Verriegelungskörpers (18) mindestens zwei in Umfangsrichtung gegeneinander versetzte, in Achsrichtung der Zylinderfeder (17) verlaufende Haken (19) angebracht sind, welche die Zylinderfeder (17) von außen umgreifen.

6. Vorrichtung nach einem der Ansprüche 1 bis 4, dadurch gekennzeichnet, daß an der Erweiterung des Verriegelungskörpers (18) ein die Zylinderfeder (17) von außen umgreifender umlaufender Kragen angebracht ist.

## Claims

1. Device for transmitting signals between two terminals, between which there is a coiled line (10), housed in an essentially circular cartridge (K), to which continuation lines can be connected at both terminals, and of which the length is significantly greater than the distance between the two terminals, whereby at least one of the two terminals can be moved in relation to the other, whereby the cartridge (K) consists of two parts, namely a rotor (11) which can be rotated around the axis of the cartridge (K) and a fixed stator (12), between which the line (10) is arranged, whereby the cartridge (K) has a spring-activated, axially moveable locking device (18) to define an assembly position, in which the rotor (11) is fixed so it cannot be turned in relation to the stator (12), and whereby latching elements of the locking device (18) situated concentrically to the axis (A) of the cartridge (K), are spring-activated to engage with the stator (12) when the cartridge (K) is in its assembly position, and when it is in its operating position are caused by the reverse spring action to be separated from the stator (12) by a space in between, **characterised by the fact that,**
- in order to produce the spring action, a cylinder spring (17) is located in a central recess (15) of the rotor (11), concentric to the axis (A) of the cartridge (K), which spring lies with one end on the bottom (16) of the recess (15) and with the other end, when the cartridge (K) is in the assembly position, protruding out beyond it and that
- the locking device (18) is located in the cylinder spring (17), encloses the cylinder spring (17) at the free end protruding over the cartridge (K), and has at least two latching arms (20), separated from each other and offset along the length of the cylinder spring (17), forming the locking components, which arms run parallel to the axis (A) of the cartridge (K) and protrude over the end of the spring cylinder (17) lying on the bottom (16) of the recess (15).

2. Device according to claim 1, characterised by the fact that the latching arms (20) are connected together on their inner sides by a ring wheel-shaped stay (21) on the locking device (18).

3. Device according to claim 1 or 2, characterised by the fact that the coils of the cylinder spring (17), are smaller in diameter in their central part than the coils at the ends, with the same transition to the ends.

4. Device according to one of the claims 1 to 3, characterised by the fact that the locking device (18) is in the form of a pipe, with an extension at one end, which protrudes in both axial and radial directions beyond the free end of the cylinder spring (17).

5. Device according to one of the claims 1 to 4, characterised by the fact that on the extension of the locking device (18) there are at least two hooks (19), offset from one another around the circumference, running along the direction of the axis of the cylinder spring (17), encompassing the cylinder spring (17) from outside.

6. Device according to one of the claims 1 to 4, characterised by the fact that on the extension of the locking device (18) there is a collar which surrounds and rotates around the cylinder spring (17) from outside.

## Revendications

1. L'invention se rapporte à un dispositif de transfert de signal entre les deux extrémités d'une ligne, entre lesquelles une conduite (10) développée en spires est positionnée dans une cassette bien circulaire (K), à laquelle d'autres conduites menant aux extrémités de la ligne peuvent être raccordées et dont les longueurs sont beaucoup plus grandes que l'espacement des deux extrémités d'une ligne, -dans lequel au moins une des deux extrémités de la ligne est relativement mobile par rapport à l'autre, dans lequel la cassette (K) se compose de deux parties, un rotor (11) tournant autour de l'axe de la cassette (K) et un stator (12) fixe, entre lesquels la conduite (10) est positionnée, dans lequel on trouve sur la cassette (K) une pièce de verrouillage (18), mobile de façon axiale et sous effet d'un ressort, servant à la détermination d'une position de montage, dans lequel le rotor (11), en regard du stator (12), est fixé de façon irréversible, et dans lequel des éléments d'encliquetage de la pièce de verrouillage (18) placée de façon concentrique à l'axe de la cassette (K) dans la position de montage de cette dernière, agissent, sous l'effet d'un ressort, dans le stator et sont dans leur position de travail, malgré l'effet de ressort, séparés du stator (12) par un interstice, **caractérisé par le fait,**
- que pour atteindre l'effet élastique, un ressort cylindrique (17) est logé dans un évidement central (15) du rotor (11) de façon concentrique à l'axe (A) de la cassette (K) ; ce ressort cylindrique (17) repose d'un côté sur le fond (16) de l'évidement (15) et de l'autre côté déborde de la cassette (K) en position de montage et,
- que la pièce de verrouillage (18) est logée dans le ressort cylindrique (17) ; cette pièce, dans sa partie libre débordant de la cassette (K), entoure le ressort cylindrique (17) et possède au moins deux éléments formant des bras d'encliquetage (20) séparés et positionnés l'un face à l'autre sur le pourtour du ressort cylindrique (17) ; ces bras d'encliquetage (20) sont parallèles à l'axe (A) de la cassette (K) et sont en saillie par rapport au côté du ressort cylindrique (17) posé sur le fond (16) de l'évidement (15).

2. Dispositif selon demande 1, caractérisé par le fait, que les bras d'encliquetage (20) sont reliés ensemble sur leurs faces intérieures par un support (21) de la pièce de verrouillage (18).

3. Dispositif selon demande 1 ou 2, caractérisé par le fait, que les spires centrales du cylindre (17), à transition uniforme vers les extrémités, ont un diamètre plus petit que ceux des spires situées à ces deux extrémités.

4. Dispositif selon une des demandes 1 à 3, caractérisé par le fait, que la pièce de verrouillage (18) réalisée en forme de tube avec un évasement à une extrémité, est en saillie, de facon axiale et radiale, par rapport à l'extrémité libre du ressort cylindrique (17).

5. Dispositif selon une des demandes 1 à 4, caractérisé par le fait, que dans le prolongement de la pièce de verrouillage, se trouvent au moins deux crochets diamétralement opposés sur le pourtour et orientés suivant l'axe du ressort cylindrique (17), lesquels englobent le ressort cylindrique (17) de l'extérieur.

6. Dispositif selon une des demandes 1 à 4, caractérisé par le fait, que sur le prolongement de la pièce de verrouillage (18) se trouve un collet continu qui englobe de l'extérieur le ressort cylindrique (17).
